# EUROPÄISCHE PATENTSCHRIFT

(11) **EP 1 263 575 B1**
(45) Veröffentlichungstag und Bekanntmachung des Hinweises auf die Patenterteilung: **06.06.2007**
(21) Anmeldenummer: 01909643.7
(22) Anmeldetag: 17.01.2001
(51) Int. Cl.: B32B 7/14, G10K 11/168

(54) **MEHRSCHICHTIGE DÄMPFUNGSFOLIE SOWIE VERFAHREN ZU DEREN HERSTELLUNG**
DAMPING FOIL CONSISTING OF SEVERAL LAYERS AND A METHOD FOR PRODUCING SAME
FILM D'AMORTISSEMENT SONORE MULTICOUCHE ET SON PROCEDE DE PRODUCTION

(30) Priorität: 28.01.2000 DE 10003810
(43) Veröffentlichungstag der Anmeldung: 11.12.2002
(73) Patentinhaber: Stankiewicz GmbH, 29352 Adelheidsdorf (DE)
(72) Erfinder: RUST, Torsten, 30826 Garbsen (DE); BLÜMEL, Ehrenfried, 29352 Adelheidsdorf (DE)
(74) Vertreter: Melzer, Wolfgang
(86) Internationale Anmeldenummer: PCT/EP2001/000499
(87) Internationale Veröffentlichungsnummer: WO 2001/054897

(56) Entgegenhaltungen:
- EP-A- 0 195 923
- EP-A- 0 285 740
- EP-A- 0 673 763
- GB-A- 1 481 163
- US-A- 5 258 585

## Beschreibung

Die Erfindung betrifft eine mehrschichtige Dämpfungsfolie oder Entdröhnungsfolie mit den Merkmalen des Oberbegriffs des Anspruches 1.

Dämpfungsfolien oder Entdröhnungsfolien werden, insbesondere in der Automobilindustrie zum Entdröhnen, d.h. zur Schalldämpfung, von Blechen eingesetzt. Insbesondere müssen derartige Dämpfungsfolien in die innenseitigen Dach- und Seitenbereiche einer Karosserie eingelegt werden können und dort fest und vollflächig haften. Häufig werden derartige Dämpfungsfolien überlackiert. Die vollflächige Haftung wird gemäß dem Stand der Technik dadurch erreicht, daß die zum bedämpfenden Blech weisenden Seite der Dämpfungsfolie mit einem Heißschmelzkleber versehen wird und nach Aufbringen der Dämpfungsfolie auf das zu bedämpfende Blech eine Wärmebehandlung durchgeführt wird, die das Schmelzen des Heißschmelzklebers bewirkt und damit die vollflächige Verklebung erreicht. Um die Dämpfungsfolie vor der Wärmebehandlung in Lage halten zu können, insbesondere bei Dach- und Seitenbereich einer Karosserie, ist gemäß dem Stand der Technik eine solche Dämpfungsfolie magnetisierbar ausgerüstet worden. Zu diesem Zweck sind bisher stab- oder streifenförmige Metallteile in die zum bedämpfenden Blech weisende Seite der Dämpfungsfolie eingebracht worden (DE 38 25 494 A1) oder sind Ferritpulver oder dgl. magnetische oder magnetisierbare pulverförmige Teilchen in die Dämpfungsfolie bei deren Fertigung eingemischt worden (DE 34 27 916 A1). Derart ausgerüstete Dämpfungsfolien haften während der Wärmebehandlung an dem Karosserieblech, sei es aufgrund eigener magnetischer Eigenschaften, sei es aufgrund von auf der anderen Seite des Bleches angeordneten Permanentmagneten, die die magnetisierbaren Teilchen in der Dämpfungsfolie und damit die gesamte Dämpfungsfolie anziehen. Nachdem festgestellt worden ist, daß es genügt nur eine gewisse Schichtdicke entsprechend auszurüsten, wurde vorgeschlagen, einen mehrschichtigen Aufbau zu verwenden, bei dem eine dem Blech zugewandte untere Schicht magnetische oder magnetisierbare Teilchen enthält und eine vom Blech abgewandte Schicht, die im wesentlichen die Dämpfungsfunktion erfüllt, ohne derartige Teilchen auskommen kann. Zwischen diesen beiden im allgemeinen Bitumenmaterial aufweisenden Schichten kann nach dem Stand der Technik eine flexible Folie aus Aluminium oder Polyethylen eingebettet sein (EP 0 285 740 B1).

Insbesondere die die magnetischen oder magnetisierbare Teilchen aufweisende dem zu bedämpfenden Blech zugewandte Schicht weist hohe Flächenmasse auf und bestimmt damit das Gesamtgewicht der aufzubringenden Dämpfungsfolie sehr wesentlich, ohne daß diese Schicht wesentlich zur Dämpfung beiträgt.

Ausgehend hiervon ist es Aufgabe der Erfindung, eine wie vorstehend erläuterte Dämpfungsfolie dahingehend zu verbessern, daß ohne Beeinträchtigung des Schalldämpfungsverhaltens und der Applizierbarkeit auf dem zu dämpfenden Teil die Flächenmasse herabgesetzt wird.

Die Aufgabe wird erfindungsgemäß dadurch gelöst, daß die dem zu bedämpfenden Teil, wie einem Karosserieblech, zugewandte untere Schicht zahlreiche durchgehende Öffnungen im Sinne einer Perforierung aufweist.

Die Erfindung wird durch die Merkmale der Unteransprüche weitergebildet.

Von besonderem Vorteil in schalltechnischer Hinsicht ist es, zwischen den beiden Schichten eine Zwischenschicht aus Vlies oder Kraftpapier vorzusehen.

Bei einer für bestimmte Fertigungstechniken besonderen Ausbildungsform ist es zweckmäßig, diese Öffnungen nicht nur in der unteren Schicht sondern auch in der zugehörigen Zwischenschicht vorzusehen, derart daß das Material der oberen Schicht bei dessen Aufbringen durch die Öffnungen eindringen kann. Selbst wenn dadurch die Flächenmasse der unteren Schicht geringfügig erhöht ist gegenüber einer Ausführungsform, bei der die Öffnungen luftgefüllt sind, so ist die Dämpfungsfolie doch insgesamt günstiger herzustellen, da das Material der oberen Schicht auf die mit der Zwischenschicht versehene untere Schicht in einfacher Weise aufgebracht werden kann und sich sehr gut mit unterer Schicht und Zwischenschicht verbindet.

Alternativ kann die untere Schicht auch als adhäsive, eine kraftschlüssige Verbindung erreichende, jedoch zerstörungsfrei wiederentfernbare Schicht ausgebildet sein, wie dies an sich bekannt ist aus DE 35 10 932 A1 oder EP 0 195 923 B1.

Bei der Herstellung einer erfindungsgemäßen Dämpfungsfolie wird auf ein die untere Schicht bildendes Bahnenmaterial nach deren Perforation ein die obere Schicht bildendes Bahnenmaterial aufkaschiert oder in anderer Weise aufgebracht. Falls eine Zwischenschicht vorgesehen ist, ist diese, vor oder nach dem Perforieren der unteren Schicht auf diese aufzukaschieren. Beispielsweise kann das Vliesmaterial oder das Kraftpapier, das die Zwischenschicht bildet, beidseitig klebend ausgerüstet sein.

Die Erfindung wird nun anhand der in der Zeichnung dargestellten Ausführungsbeispiele näher erläutert. Es zeigen
Fig. 1 in Explosionsdarstellung und perspektivisch einen Ausschnitt einer Dämpfungsfolie gemäß der Erfindung mit Blick auf die zum bedämpfenden Teil weisenden Seite,
Fig. 2 im Schnitt eine auf ein zu bedämpfendes Blech aufgelegte Dämpfungsfolie gemäß einer ersten Ausführungsform,
Fig. 3 im Schnitt eine auf ein zu bedämpfenden Blech aufgelegte Dämpfungsfolie gemäß einer zweiten Ausführungsform,
Fig. 4 im Schnitt eine auf ein zu bedämpfendes Blech aufgelegte Dämpfungsfolie gemäß einer weiteren Ausführungsform,
Fig. 5 die Temperaturabhängigkeit des gemäß dem Biegeschwingungsversuch ermitteltem Verlustfaktor einer Ausführungsform einer Dämpfungsfolie gemäß Fig. 2.

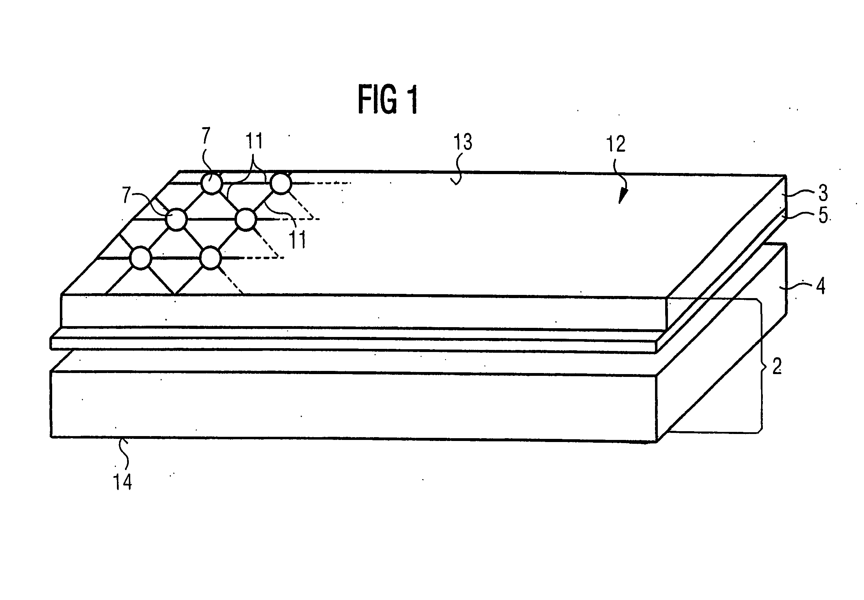

Fig. 1 zeigt perspektivisch und in Explosionsdarstellung eine Dämpfungsfolie 2 bei Blick auf die zu einem bedämpfenden Teil weisende Seite 13 einer zu dem zu bedämpfenden Teil weisenden "unteren" Schicht 3 der Dämpfungsfolie 2. Die Dämpfungsfolie 2 weist ferner eine von dem zu bedämpfenden Teil abgewandte "obere" Schicht 4 sowie eine filmartige durch Vlies oder durch Kraftpapier gebildeten Zwischenschicht 5 zwischen den Schichten 3 und 4 der Dämpfungsfolie 2. Auf der zum zu bedämpfenden Teil weisenden Seite 13 kann ein Klebstoff wie ein Heißschmelzkleber 12 oder ein Dispersionskleber aufgebracht sein. Die untere Schicht 3 der Dämpfungsfolie 2 ist zumindest im Bereich dieser Seite 13 als ein zumindest eine vorübergehende kraftschlüssige Verbindung mit dem zu bedämpfenden Teil erreichendes Element ausgebildet. Gemäß einer ersten Ausführungsform sind in das Material der unteren Schicht 3 magnetisierte oder magnetisierbare Teilchen (etwa im Sinne von DIN 17470 und DIN 50470), im folgenden kurz Ferritpulver genannt, eingebettet.

Zur Gewichtsreduktion weist diese untere Schicht 3 Öffnungen 7 auf, von denen einige dargestellt sind. Diese Öffnungen sind im Sinne von Perforationen zur einfachen Herstellung zweckmäßig die gesamte untere Schicht 3 durchsetzend ausgebildet. Ferner sind vorteilhaft Einprägungen 11 in der Seite 13 der unteren Schicht 3 vorgesehen, die derart angeordnet sind, daß sie die Öffnungen 7 verbinden. Sie dienen dazu, bei der Wärmebehandlung zum Aktivieren des Heißschmelzklebers 12 zu verhindern, daß zwischen zu bedämpfendem Teil und der Seite 13 der Schicht 3 Lufteinschlüsse verbleiben. Das Flächenmuster der Einprägungen 11 ist dabei nicht auf das in der Fig. 1 dargestellte Musters beschränkt. Wesentlich ist, daß Einprägungen 11 für jede der Öffnungen 7 vorgesehen sind.

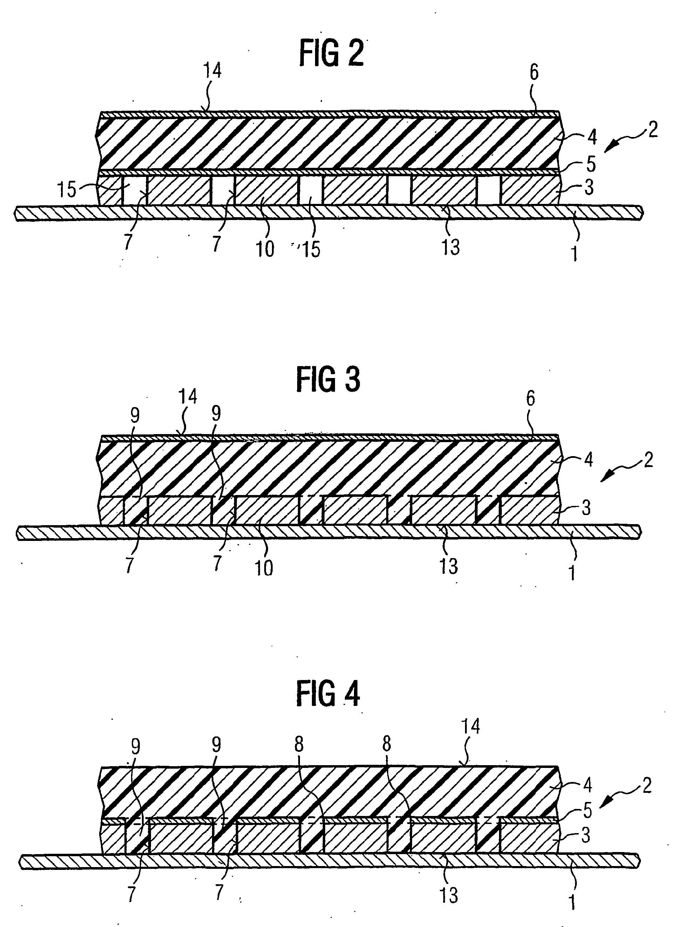

Der Lochanteil der Öffnungen 7 beträgt 5 bis 30 % der unteren Schicht 3. Zweckmäßig hat die untere Schicht 3 eine Dicke von 0,3 bis 1,2 mm, vorzugsweise von 0,5 bis 1 mm und besteht vorzugsweise aus einem Bitumen bzw. einer Bitumenmischung mit einem etwa 50 bis 70 Gew-% aufweisenden Ferritpulveranteil. Die keine derartigen magnetischen oder magnetisierbaren Teilchen enthaltende von dem zu bedämpfenden Teil abgewandte obere Schicht 4 der Dämpfungsfolie 2 ist etwa 0,8 bis 2mm dick und besteht zweckmäßig ebenfalls aus Bitumen bzw. einer Bitumenmischung. Diese obere Schicht 4 ist mit der die Öffnungen 7 aufweisenden, unteren Schicht 3 fest verbunden, beispielsweise durch Aufkleben oder Aufkaschieren. Aus schalltechnischen Gründen ist es von erheblichem Vorteil, zwischen diesen beiden Schichten 3 und 4 eine dünne Zwischenschicht 5 aus Vlies oder Kraftpapier vorzusehen. Die Dicke dieser Zwischenschicht 5 liegt in der Größenordnung von 0,1mm. Sie kann auf die untere Schicht 3 aufkaschiert oder aufgeklebt sein, worauf auf diese wiederum die obere Schicht 4 aufkaschiert oder aufgeklebt wird. Von Vorteil ist eine beidseitig klebend ausgerüstete Zwischenschicht 5. Wie weiter unten anhand von Fig. 2 und Fig. 4 erläutert, kann die Zwischenschicht 5 durchgehend (Fig. 2) sein oder ebenfalls Öffnungen 8 aufweisend (Fig. 4) ausgebildet sein.

Die dem zu bedämpfenden Teil abgewandte Seite 14 der oberen Schicht 4 der Dämpfungsfolie 2 ist die sogenannte Sichtseite, die in vielen Anwendungsfällen, insbesondere bei der Bedämpfung von Karosserieblechen überlackiert werden soll. Sie kann daher zweckmäßig eine weitere, Abdeckschicht 6 (Fig. 2 und Fig. 3) aufweisen, die das Langzeitverhalten dieser Sichtseite 14 stabilisiert. Diese Abdeckschicht 6 kann zur Vermeidung von Verblockung während des Transportes bzw. der Lagerung durch eine an sich bekannte Antiblockbeschichtung gebildet sein, sie kann auch durch eine Dispersionsbeschichtung gebildet sein, um die nach außen sichtbare Wirkung von Vergilben bei hellen Decklacken zu verringern. Diese Abdeckschicht 6 ist jedoch nicht erforderlich, wenn weder eine Verblockungsgefahr noch eine Vergilbungsgefahr zu befürchten ist.

Fig. 2 zeigt die Applizierung der Dämpfungsfolie 2 auf einem zu bedämpfenden Teil, insbesondere einem Blech 1. Bei dem Ausführungsbeispiel gemäß Fig. 2 ist eine Zwischenschicht 5 vorgesehen, die nicht perforiert ist. Hierdurch ist verhindert, daß Material der oberen Schicht 4. in die Öffnungen 7 eindringen kann, was bei Wärmeeinwirkung auftreten könnte, wobei dieses Einfallen in der nach außen weisenden Sichtseite 14 in Erscheinung kann. Diese Ausführungsform ist dann von besonderem Vorteil, wenn die beiden Schichten 3 und 4 als Bahnenmaterial getrennt gefertigt und dann aufeinander kaschiert werden sollen.

Es ist jedoch eine andere Herstellungsweise denkbar, nämlich die, daß bei als Bahnenmaterial gefertigter Schicht 3 mit dort vorgesehenen Öffnungen 7, das die Schicht 4 bildende Material direkt aufgebracht wird, derart, daß es in die Öffnungen 7 ganz oder teilweise eindringen kann, wie das durch die pfropfenartigen Eindringungen 9 dargestellt ist. Hierdurch wird eine außerordentlich gute feste Verbindung zwischen den beiden Schichten 3 und 4 gewährleistet. Dies ist in Fig. 3 näher dargestellt. Um den im allgemeinen erwünschten hohen Verlustfaktor erreichen zu können, ist es auch hier zweckmäßig, eine Zwischenschicht 5 vorzusehen. Um ebenfalls Eindringungen erreichen zu können, ist es zweckmäßig, auch die Zwischenschicht 5 mit entsprechenden Öffnungen 8 zu versehen, die mit den Öffnungen 7 in der unteren Schicht 3 fluchten. Es ist jedoch keineswegs dringend notwendig, daß alle Öffnungen 7 in der unteren Schicht 3 mit einer jeweils zugehörigen Öffnung 8 in der Zwischenschicht 5 fluchten. Dies ist lediglich in dem Umfang erforderlich, als die feste Verbindung zwischen Unterschicht 3 und obere Schicht 4 zu gewährleisten ist. Dabei ist zu beachten, daß die Eindringungen 9 höheres Gewicht haben als die Lufteinschlüsse in die Öffnungen 7 der Ausführungsform gemäß Fig. 2.

In Fig. 2 sind die dem magnetischen oder magnetisierbaren Eigenschaften der gesamten Dämpfungsfolie 2 bewirkenden Ferritpulverteilchen durch Punkte 10 dargestellt. Unter Ferritpulverteilchen sollen damit lediglich Einschlüsse verstanden werden, die die angestrebte Wirkung auslösen können, nämlich die Haftung der Dämpfungsfolie 2 an dem zu bedämpfenden Blech 1 zumindest während der Wärmebehandlung nach dem Auflegen der Dämpfungsfolie 2 auf das Blech 1 zum Erreichen der festen Verbindung mittels eines Heißschmelzklebers, wie das weiter oben erläutert ist. Diese Haftung kann durch die eigene magnetische Eigenschaft dieser Teilchen 10 bewirkt sein oder durch die Fähigkeit, mit auf der anderen Seite des Bleches 1 vorgesehenen Dauermagneten zusammenzuwirken.

Diese (in aller Regel nur vorläufige) Haftung kann jedoch auch vollkommen oder teilweise durch eine an sich bekannte sogenannte adhäsive Ausrüstung der unteren Schicht 3 bewirkt werden. Diese adhäsive Ausrüstung die eine kraftschlüssige flächige Verbindung der Dämpfungsfolie 2 mit dem Blech 1 erlaubt, wobei die Dämpfungsfolie 2 jedoch vollständig zerstörungsfrei wieder entfernbar ist, ist insbesondere dadurch erreicht, daß die Schicht auf der zum Blech 1 weisenden Seite 13 bzw. in dem dazu benachbarten Abschnitt einen aus einem stark untervernetzten Polyurethan bestehenden Schichtaufbau. Bei Bitumen, insbesondere Oxidationsbitumen, ist dies durch Zumischung von ataktischem Propylen erreichbar in einem Anteil von atakischem Polypropylen zu Bitumen von etwa 1:3. Bei der Abmischung des Materials für die untere Schicht 3 ist vorteilhaft die Viskosität in der Schmelze bei 180°C etwa 50.000mPa.s und mehr mit einem Penetrationswert nach DIN1995 zwischen 15 und 55 vorzugsweise zwischen 35 und 55.

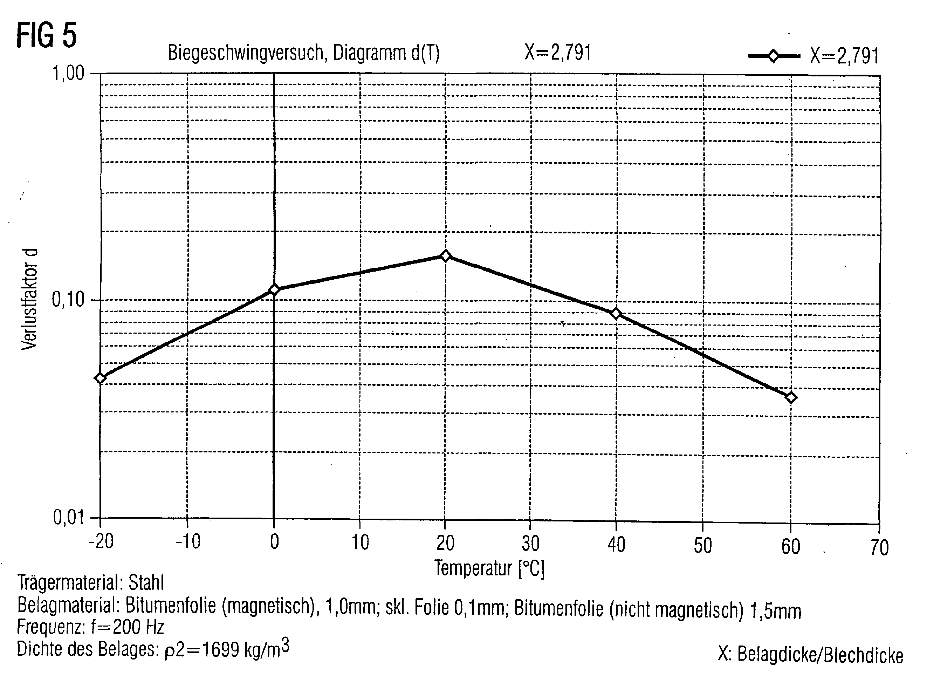

Zur Verdeutlichung der schalldämmenden Funktion der Dämpfungsfolie 2 zeigt Fig. 5 das Ergebnis eines Biegeschwingversuches, gemessen nach DIN 53440 bei einer Frequenz von 200Hz.

Gemäß der Erfindung ist es auch möglich, daß die untere Schicht 3 sowohl adhäsiv ausgerüstet als auch mit Ferritteilchen versehen sein kann.

Zur erreichbaren Gewichtseinsparung ist darauf zu verweisen, daß herkömmliche einschichtige oder zweischichtige Dämpfungsfolien die Verlustfaktoren von mehr als 0,1 bei 0°C bis 35...40°C erreichen ein Flächengewicht haben, daß 5kg/m² und mehr besitzt. Bei Anwendung der vorliegenden Erfindung lassen sich diese Flächengewichte insgesamt deutlich auf etwa 4,2kg/m² und weniger verringern.

## Patentansprüche

1. Mehrschichtige Dämpfungsfolie (2) zur Körperschalldämpfung (Entdröhnung) eines zu bedämpfenden Teils (1), wie eines Blechs, insbesondere eines Karosserieblechs,
bei der die zum bedämpfenden Teil (1) weisende untere Schicht (3) Eigenschaften aufweist, die zur Haftung der Dämpfungsfolie (2) auf dem zu bedämpfenden Teil (1) geeignet sind, und die von dem zu bedämpfenden Teil (1) abgewandte obere Schicht (4) die Haftungseigenschaft nicht besitzt,
**dadurch gekennzeichnet,**
**dass** die unter Schicht (3) zahlreiche durchgehende Öffnungen (7) mit einem Öffnungsanteil (Lochanteil) von 5 bis 30% aufweist und
**dass** die untere Schicht (3) eine Dicke von etwa 0,3mm bis 1,2mm und die obere Schicht (4) eine Dicke von etwa 0,8mm bis 2,0mm besitzen.

2. Dämpfungsfolie nach Anspruch 1,
**dadurch gekennzeichnet,**
**dass** die untere Schicht (3) auf der zum Teil (1) weisenden Seite (13) Einprägungen (11) aufweist, die die Öffnungen (7) miteinander verbinden.

3. Dämpfungsfolie nach Anspruch 1 oder 2,
**dadurch gekennzeichnet,**
**dass** zwischen unterer und oberer Schicht (3, 4) eine dünne, filmartige Zwischenschicht (5) vorgesehen ist.

4. Dämpfungsfolie nach Anspruch 3,
**dadurch gekennzeichnet,**
**dass** die Zwischenschicht (5) mit den Öffnungen (7) in der unteren Schicht (3) fluchtende Öffnungen (8) aufweist.

5. Dämpfungsfolie nach Anspruch 3 oder 4,
**dadurch gekennzeichnet,**
**dass** die Zwischenschicht (5) eine Vlies- oder Kraftpapierschicht ist.

6. Dämpfungsfolie nach einem der Ansprüche 3 bis 5,
**dadurch gekennzeichnet,**
**dass** die Zwischenschicht (5) beidseitig mit einer Klebeschicht zur Verbindung mit unterer und oberer Schicht (3, 4) versehen ist.

7. Dämpfungsfolie nach einem der Ansprüche 1 bis 6,
**dadurch gekennzeichnet,**
**dass** die untere Schicht (3) magnetische oder magnetisierbare Teilchen (10) enthält.

8. Dämpfungsfolie nach Anspruch 7,
**dadurch gekennzeichnet,**
**dass** die Teilchen (10) in einem Anteil von 50 - 70 Gew-% vorliegen.

9. Dämpfungsfolie nach einem der Ansprüche 1 bis 8,
**dadurch gekennzeichnet,**
**dass** die untere Schicht (3) auf ihrer zum Teil (1) weisenden Seite (13) eine Dispersionskleber- oder Heißschmelzkleberschicht (12) aufweist.

10. Dämpfungsfolie nach einem der Ansprüche 1 bis 9,
**dadurch gekennzeichnet,**
**dass** die obere Schicht (4) auf ihrer dem Teil (1) abgewandten Seite (14) eine Dispersionsbeschichtung, eine Antiblockbeschichtung oder dergleichen Oberflächen-Abdeckschicht (6) aufweist.

11. Dämpfungsfolie nach einem der Ansprüche 1 bis 10,
**dadurch gekennzeichnet,**
**dass** das Basismaterial von oberer (4) und/oder unterer Schicht (3) ein Bitumenmaterial ist.

12. Dämpfungsfolie nach Anspruch 2,
**dadurch gekennzeichnet,**
**dass** die Zwischenschicht eine Dicke von etwa 0,1 mm besitzt.

13. Dämpfungsfolie nach einem der Ansprüche 1 bis 12,
**dadurch gekennzeichnet,**
**dass** die Dämpfungsfolie (2) so bemessen ist, dass der Verlustfaktor mehr als 0,1 bei 0 bis 35...40°C beträgt, wobei die Flächenmasse unter 5 kg/m², vorzugsweise unter 4,2 kg/m² beträgt.

14. Dämpfungsfolie nach einem der Ansprüche 1 bis 13,
**dadurch gekennzeichnet,**
**dass** zur Ausrüstung als adhäsive, zerstörungsfrei entfernbare Dämpfungsfolie (2), aber dennoch Bewirken einer kraftschlüssigen Verbindung mit dem Teil (1) die untere Schicht (3) zumindest an seinem zum Teil (1) weisenden Abschnitt einen aus einem stark untervernetzten Polyurethan bestehenden Schichtaufbau aufweist.

15. Dämpfungsfolie nach Anspruch 14,
**dadurch gekennzeichnet,**
**dass** die untere Schicht (3)eine Abmischung aus Bitumen, insbesondere Oxidationsbitumen und ataktischem Polypropylen (APP) ist.

16. Dämpfungsfolie nach Anspruch 15,
**gekennzeichnet durch**
ein Verhältnis von ataktischem Polypropylen zu Bitumen von etwa 1:3.

17. Dämpfungsfolie nach Anspruch 15 oder 16,
**gekennzeichnet durch**
eine Viskosität in der Schmelze bei 180°C von ≥ 50000 mPa.s und einem Penetrationswert nach DIN 1995 zwischen 15 und 55, vorzugsweise zwischen 35 und 55.

18. Verfahren zum Herstellen einer mehrschichtigen Dämpfungsfolie (2) nach einem der vorstehenden Ansprüche mit den Schritten
Herstellen einer Schicht (3), die zur Haftung auf einem zu bedämpfenden Teil (1) geeignet ist,
Perforieren dieser Schicht (3) und
Aufbringen, insbesondere Aufkaschieren einer weiteren, oberen Schicht (4) auf die erstgenannte, untere Schicht (3).

19. Verfahren nach Anspruch 18,
**dadurch gekennzeichnet,**
**dass** vor oder nach dem Perforieren eine dünne, flexible Zwischenschicht (5) auf die erstgenannte, untere Schicht (3) aufgebracht, insbesondere aufkaschiert wird.

20. Verfahren nach Anspruch 18 oder 19,
**gekennzeichnet durch**
Einprägen von Vertiefungen in die erstgenannte, untere Schicht (3) auf ihrer nach dem Aufbringen der oberen Schicht (4) dieser abgewandten Seite (13) derart, dass diese die **durch** die Perforierung gebildeten Öffnungen (7) miteinander verbinden.

## Claims

1. Multilayer absorbing foil (2) for structure-borne noise absorption (sound deadening) of a part (1) which is to be deadened, such as a metal sheet, in particular an autobody sheet,
in which the lower layer (3) which is orientated towards the part (1) which is to be deadened has properties which are suitable for adhesion of the absorbing foil (2) onto the part (1) which is to be deadened, and the upper layer (4) which is orientated away from the part (1) which is to be deadened does not have the adhesion property,
**characterised in that**
the lower layer (3) has numerous through-openings (7) with an opening proportion (hole proportion) of 5 to 30% and
**in that** the lower layer (3) has a thickness of approximately 0.3 mm to 1.2 mm and the upper layer (4) has a thickness of approximately 0.8 mm to 2.0 mm.

2. Absorbing foil according to claim 1,
**characterised in that**
the lower layer (3) has impressions (11) on the side (13) which is orientated towards the part (1) which connect the openings (7) to each other.

3. Absorbing foil according to claim 1 or 2,
**characterised in that**,
between lower and upper layer (3, 4), a thin film-like intermediate layer (5) is provided.

4. Absorbing foil according to claim 3,
**characterised in that**
the intermediate layer (5) has openings (8) which are aligned with the openings (7) in the lower layer (3).

5. Absorbing foil according to claim 3 or 4,
**characterised in that**
the intermediate layer (5) is a non-woven or kraft paper layer.

6. Absorbing foil according to one of the claims 3 to 5,
**characterised in that**
the intermediate layer (5) is provided on both sides with an adhesive layer for connecting to lower and upper layer (3, 4).

7. Absorbing foil according to one of the claims 1 to 6,
**characterised in that**
the lower layer (3) contains magnetic or magnetisable particles (10).

8. Absorbing foil according to claim 7,
**characterised in that**
the particles (10) are present in a proportion of 50 - 70% by weight.

9. Absorbing foil according to one of the claims 1 to 8,
**characterised in that**
the lower layer (3) has, on the side (13) thereof which is orientated towards the part (1), a dispersion adhesive layer or heat-melting adhesive layer (12).

10. Absorbing foil according to one of the claims 1 to 9,
**characterised in that**
the upper layer (4) has, on the side (14) thereof which is orientated away from the part (1), a dispersion coating, an antiblocking coating or similar surface-covering layer (6).

11. Absorbing foil according to one of the claims 1 to 10,
**characterised in that**
the basic material of upper (4) and/or lower layer (3) is a bitumen material.

12. Absorbing foil according to claim 2,
**characterised in that**
the intermediate layer has a thickness of approximately 0.1 mm.

13. Absorbing foil according to one of the claims 1 to 12,
**characterised in that**
the absorbing foil (2) is dimensioned such that the loss factor is more than 0.1 at 0 to 35 ... 40°C, the surface density being below 5 kg/ m², preferably below 4.2 kg/ m².

14. Absorbing foil according to one of the claims 1 to 13,
**characterised in that**,
for equipping as an adhesive absorbing foil (2) which can be removed without destruction but nevertheless effects a frictional connection to the part (1), the lower layer (3) has, at least on the portion thereof which is orientated towards the part (1), a layer construction which comprises a strong, undercured polyurethane.

15. Absorbing foil according to claim 14,
**characterised in that**
the lower layer (3) is a mixture made of bitumen, in particular oxidised bitumen and atactic polypropylene (APP).

16. Absorbing foil according to claim 15,
**characterised by**
a ratio of atactic polypropylene to bitumen of approximately 1:3.

17. Absorbing foil according to claim 15 or 16,
**characterised by**
a viscosity in the melt at 180°C of ≥ 50,000 mPa and a penetration value according to DIN 1995 between 15 and 55, preferably between 35 and 55.

18. Method for producing a multilayer absorbing foil (2) according to one of the preceding claims with the steps:
production of a layer (3) which is suitable for adhesion on a part (1) which is to be deadened,
perforation of this layer (3) and
application, in particular lamination on, of a further, upper layer (4) onto the first-mentioned, lower layer (3).

19. Method according to claim 18,
**characterised in that**,
before or after perforation, a thin, flexible intermediate layer (5) is applied onto the first-mentioned, lower layer (3), in particular laminated on.

20. Method according to claim 18 or 19,
**characterised by**
impressing of recesses in the first-mentioned, lower layer (3) on the side (13) thereof which is orientated away from the upper layer (4) after application thereof, such that said recesses connect the openings (7), which are formed by perforation, to each other.

## Revendications

1. Film d'amortissement multicouches (2) destiné à amortir les bruits de structure (insonoriser) d'une pièce à amortir (1), comme une tôle, en particulier une tôle de carrosserie,
dans lequel la couche inférieure (3) tournée vers la pièce à amortir (1) présente des propriétés qui conviennent pour faire adhérer le film d'amortissement (2) à la pièce à amortir (1), et la couche supérieure (4) opposée à la pièce à amortir (1) ne possède pas de propriété d'adhérence,
**caractérisé en ce que**
la couche inférieure (3) comprend de nombres ouvertures de passage (7) dotées d'un pourcentage d'ouvertures (pourcentage de trous) de 5 à 30% et
**en ce que** la couche inférieure (3) possède une épaisseur d'approximativement 0, 3 mm à 1,2 mm et la couche supérieure (4) une épaisseur d'approximativement 0,8 mm à 2,0 mm.

2. Film d'amortissement selon la revendication 1,
**Caractérisé en ce que**
la couche inférieure (3) sur la face (13) tournée vers la pièce (1) comprend des gaufrages (11) qui relient les ouvertures (7) les unes aux autres.

3. Film d'amortissement selon la revendication 1 ou 2,
**caractérisé en ce que**
une couche intermédiaire (5) mince et du type film est prévue entre les couches inférieure et supérieure (3, 4).

4. Film d'amortissement selon la revendication 3,
**caractérisé en ce que**
la couche intermédiaire (5) comprend des ouvertures (8) alignées sur les ouvertures (7) dans la couche inférieure (3).

5. Film d'amortissement selon la revendication 3 ou 4,
**caractérisé en ce que**
la couche intermédiaire (5) est une couche de nontissé ou de papier kraft.

6. Film d'amortissement selon l'une quelconque des revendications 3 à 5,
**caractérisé en ce que**
la couche intermédiaire (5) est pourvue de part et d'autre d'une couche adhésive destinée à relier les couches inférieure et supérieure (3, 4),

7. Film d'amortissement selon l'une quelconque des revendications 1 à 6,
**caractérisé en ce que**
la couche inférieure (3) contient des particules magnétiques ou magnétisables (10).

8. Film d'amortissement selon la revendication 7,
**caractérisé en ce que**
les particules (10) sont présentes dans un pourcentage de 50 à 70% en poids.

9. Film d'amortissement selon l'une quelconque des revendications 1 à 8,
**caractérisé en ce que**
la couche inférieure (3) comprend sur sa face (13) tournée vers la pièce (1) une couche d'adhésif à dispersion ou d'adhésif fusible (12).

10. Film d'amortissement selon l'une quelconque des revendications 1 à 9,
**caractérisé en ce que**
la couche supérieure (4) comprend sur sa face (14) opposée à la pièce (1) un revêtement à dispersion, un revêtement d'antiblocage ou une couche de recouvrement de surfaces (6) similaire.

11. Film d'amortissement selon l'une quelconque des revendications 1 à 10,
**caractérisé en ce que**
le matériau de base des couches supérieure (4) et/ou inférieure (3) est un matériau en bitume.

12. Film d'amortissement selon la revendication 2,
**caractérisé en ce que**
la couche intermédiaire possède une épaisseur d'approximativement 0,1 mm.

13. Film d'amortissement selon l'une quelconque des revendications 1 à 12,
**caractérisé en ce que**
le film d'amortissement (2) est dimensionné de sorte que le facteur de perte s'élève à plus de 0,1 1 à 0 à 35...40°C, la masse superficielle s'élevant à moins de 5 kg/m², de préférence à moins de 4,2 kg/m².

14. Film d'amortissement selon l'une quelconque des revendications 1 à 13,
**caractérisé en ce que**
pour déposer un film d'amortissement (2) adhésif, amovible sans détérioration mais provoquer une liaison par coopération de forces avec la pièce (1), la couche inférieure (3) comprend au moins sur sa section tournée vers la pièce (1) une structure de couche constituée d'un polyuréthane fortement sous-réticulé.

15. Film d'amortissement selon la revendication 14,
**caractérisé en ce que**
la couche inférieure (3) est un mélange de bitumes, en particulier de bitumes d'oxydation et de polypropylènes atactiques (APP).

16. Film d'amortissement selon la revendication 15,
**caractérisé par**
un rapport des polypropylènes atactiques sur les bitumes d'approximativement 1:3.

17. Film d'amortissement selon la revendication 15 ou 16,
**caractérisé par**
une viscosité dans la masse fondue à 180°C ≥50000 mPa.s et un degré de pénétration selon la norme DIN 1995 compris entre 15 et 55, de préférence entre 35 et 55.

18. Procédé de fabrication d'un film d'amortissement multicouches (2) selon l'une quelconque des revendications précédentes comprenant les étapes de
fabrication d'une couche (3) qui convient pour adhérer à une pièce à amortir (1),
perforation de cette couche (3) et
application, en particulier contrecollage d'une autre couche supérieure (4) sur la couche inférieure (3) citée en premier.

19. Procédé selon la revendication 18,
**caractérisé en ce que**
une couche intermédiaire mince et flexible (5) est appliquée, en particulier contrecollée sur la couche inférieure (3) citée en premier avant ou après la perforation.

20. Procédé selon la revendication 18 ou 19,
**caractérisé par**
le gaufrage de renfoncements dans la couche inférieure (3) citée en premier sur sa face (13) opposée à celle-ci après l'application de la couche supérieure (4), de telle sorte que celles-ci relient les unes aux autres les ouvertures (7) formées par la perforation.
